# EUROPEAN PATENT SPECIFICATION

(11) **EP 1 702 272 B1**
(45) Date of publication and mention of the grant of the patent: **05.09.2012**
(21) Application number: 04776968.2
(22) Date of filing: 24.06.2004
(51) Int. Cl.: G06F 13/16, G06F 13/18

(54) **MULTIPROCESSOR MOBILE TERMINAL WITH SHARED MEMORY ARBITRATION**
MEHRPROZESSOR-MOBILENDGERÄT MIT GETEILTER SPEICHERARBITRIERUNG
TERMINAL MOBILE MULTIPROCESSEUR AYANT UN ARBITRAGE DE MEMOIRE PARTAGEE

(30) Priority: 30.12.2003 US 533158 P; 16.06.2004 US 869388
(43) Date of publication of application: 20.09.2006
(73) Proprietor: Sony Ericsson Mobile Communications AB, 221 88 Lund (SE)
(72) Inventor: HOMILLER, Daniel P., Cary, NC 27513 (US); PANTALONE, Brett A., Pittsboro, North Carolina 27312 (US)
(74) Representative: HOFFMANN EITLE
(86) International application number: PCT/US2004/020139
(87) International publication number: WO 2005/069151

(56) References cited:
- WO-A-96/41272
- WO-A-99/26154
- US-A- 5 619 669

## Description

### BACKGROUND

The present invention relates generally to the field of wireless communications and in particular to a mobile terminal having multiple CPUs that share access to a memory resource.

In early wireless communications systems, mobile terminals transmitted and received audio communications across an analog air interface. The development and deployment of digital wireless communications systems added DAC and ADC operations, error correction, convolutional coding, and the like. Later recent industry standards added additional or control communications between the mobile terminal and one or more base stations, including rate control, power control, mobile-assisted hard and soft hand-off, and the like. All of these operations and communications required real-time control, often implemented by real-time software executing on a stored program microprocessor or digital signal processor, collectively referred to herein as a CPU (central processing unit). Real-time software is characterized as being time-critical, deterministic, and highly sensitive to latency.

Modem wireless communications systems offer a plethora of services and capabilities enabled by the capability of non-voice digital data communications across the air interface and increased computational power in the mobile terminal. Such services include subscription data broadcast services such as real-time stock quotes or sports scores, Internet browsing, collaborative computing, games, email, and the transmission and display of data, image, and video files. Mobile terminal capabilities include personal productivity software such as calendar, calculator, address books, and the like. Many of these services and capabilities, while interactive in nature, are not real-time in the sense that they require real-time software to execute with subjectively sufficient response performance. These services and capabilities may be implemented by non-real-time software executing on a CPU within the mobile terminal. Non-real-time software is characterized as having relatively flexible deadlines, is often nondeterministic, and tolerates some degree of latency.

To provide sufficient computational power in a cost-effective manner, many mobile terminal designers utilize two or more concurrently executing CPUs. These multiple CPUs often share a memory resource for ease of code development and management, maximum operational flexibility, and to minimize cost Anytime multiple CPUs access a shared memory, some arbitration system is necessary to ensure data integrity. Several such arbitration schemes are known in the art.

Lockstep arbitration is useful in the case of symmetric processing with multiple identical CPUs. Each CPU executes identical instructions in "lockstep" for the purpose of parallel computation or redundancy.

Semaphore or "token bit" arbitration is useful for multiple, asynchronous processing devices. Typically, a specific memory location is designated as the semaphore location. Upon accessing the shared memory resource, a first CPU sets the semaphore bit. Other CPUs' memory accesses are limited to a read of this bit, and they do not attempt to access the memory while it is set. Upon completion of its memory operations, the first CPU clears the semaphore bit as its last memory operation. Upon a subsequent read of the semaphore bit and finding it clear, a second CPU may access the memory, setting the semaphore bit as its first memory operation to "lock out" other CPUs for the duration of its memory access. This arbitration scheme works well when the individual CPUs are able to cache instructions and data, and/or when requests to access the shared memory resource are sporadic.

Round-robin arbitration shares memory access equally among all CPUs by granting the memory to each requesting CPU in turn. No CPU is given priority access to the memory over any other requesting CPU.

In the case where one or more of the CPUs in a mobile terminal is executing real-time code, the arbitration task is complicated by the requirement that the real-time CPU be given priority access over any CPUs executing non-real-time software. None of the prior art arbitration schemes address this need for priority access.

From WO-A-9926154 a system is known in which a protocol processor (PP) and an input/output processor (IOP) share a common memory. Normally, both the PP and the IOP operate at a low priority level and share the memory. However, when the IOP's queue becomes full, the IOP's priority indicator changes to high priority. The IOP is then granted access to the memory, interrupting the PP. According to this document, the IOP must be able to produce priority signals at both high and low levels, while the PP only has to be able to produce a priority level signal at the low level.

From WO-A-9641272 a computer system is known that utilizes real-time priority signals to arbitrate bus access. In this document, when a requesting master produces a real-time indicator, it is assigned a higher priority by the bus arbitrator and, as a result, is serviced before other non-real-time priority requesting masters. According to this document, a variety of peripheral devices are coupled to the PCI bus, including real-time resources and non-real-time resources.

The present invention is defined in claims 1 and 11, respectively. Advantageous example embodiments are given in the dependent claims.

### SUMMARY

The present invention relates bo a method of arbitrating access to a memory resource between at least two CPUs in a mobile terminal. In a mobile terminal including at least two CPUs and a shared memory resource, the method comprises receiving a request and a priority indication from each said CPU and identifying the highest priority request among all requesting CPUs. If the memory resource is available, access to the memory resource is granted to the highest priority requesting CPU. If access to the memory resource is granted to another CPU of an equal or higher priority, the other CPU Is allowed to complete its access to the memory resource. If access to the memory resource is granted to another CPU of a lower priority, the other CPU's access is interrupted, and access to the memory resource is granted to the highest priority requesting CPU.

The priority indication may be a signal of one or more bits, with the requesting priority encoded therein. Alternatively, the priority indication may be an address provided by the CPU along with the shared memory access request, wherein priority among requesting CPUs is determined by a memory map.

### BRIEF DESCRIPTION OF DRAWINGS

Figure 1 is a functional block diagram of a representative mobile terminal.

Figure 2 is a functional block diagram of a multi-CPU, shared memory control unit according to one embodiment of the present invention.

Figure 3 is a representative memory map diagram.

Figure 4 is a functional block diagram of a multi-CPU, shared memory control unit according to a second embodiment of the present invention.

### DETAILED DESCRIPTION OF THE INVENTION

The present invention relates to the access control of a shared memory resource among multiple processors within a mobile terminal. As used herein, the term "mobile terminal" may include a cellular radiotelephone with or without a multi-line display; a Personal Communications System (PCS) terminal that may combine a cellular radiotelephone with data processing, facsimile and data communications capabilities; a Personal Digital Assistant (PDA) that can include a radiotelephone, pager, Interne/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

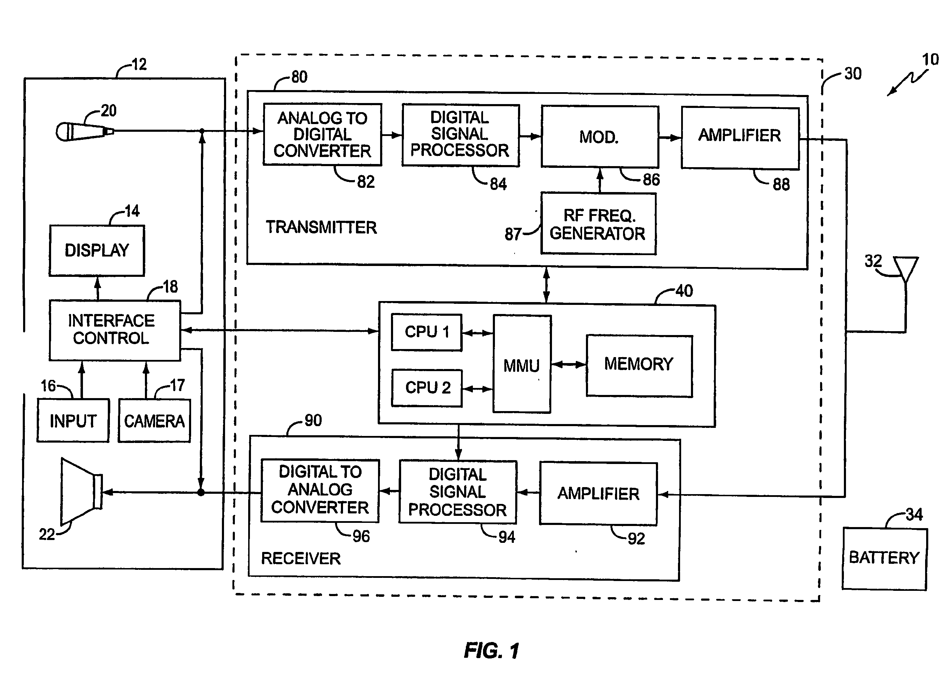

Figure 1 is a block diagram of a representative mobile terminal 10, showing one embodiment of an operator interface 12 and the communications electronics 30. Operator interface 12 contains the devices and functions necessary for the user to engage in voice communications using mobile terminal 10, as well as the inputs and display necessary for the user to control the functions and exploit the data communications capabilities of the mobile terminal 10. Communications electronics 30 contains the circuits and devices necessary for mobile terminal 10 to form a fully functional radio transceiver capable of transmitting and receiving digital or analog voice and/or data communications signals. Specifically, communications electronics 30 is connected to antenna 32, and may include control unit 40 with memory 70, transmitter 80, and receiver 90.

The operator interface 12 includes a display 14, keypad 16, an interface control unit 18, microphone 20, speaker 22, and speaker controller 24. Display 14 allows the user to see dialed digits and call status information, display menus by which the user selects modes and features, and may in general display a wide variety of content including text, images, graphics, video, and the like. Input 16 includes a keypad by which the operator dials numbers, and may additionally include keys, buttons, and one or more joysticks, touch sensitive pads, or stylus input areas, by which the operator enters commands, select options, and otherwise interacts with the mobile terminal. Input 16 may additionally include input from the display 14, where the display 14 has touchscreen capability. Optionally, a camera input 17 may provide image or video input, either from a camera integrally formed with the mobile terminal or a connector for connection to an external camera. Microphone 20 receives audio signals from the user and converts the audio signals to analog signals that are passed to the transmitter 80. Speaker 22 converts analog signals from the receiver 90 and/or the interface control unit 18 to audio signals that can be heard by the user. Interface control unit 18 interfaces the display 14, input 16, microphone 20 and speaker 22 to the control unit 40. As will be readily understood by those of skill in the art, the interface control unit 18 may be implemented as a software module executed by the control unit 40.

Viewing the communications electronics 30, as seen in Figure 1, the analog signals from the microphone 20 are directed to the transmitter 80. The transmitter 80 includes an analog to digital converter 82, a digital signal processor 84, a modulator 86, and an amplifier 88. The analog to digital converter 82 changes the analog signal from the microphone 20 into a digital signal. The digital signal is passed to the digital signal processor (DSP) 84. The digital signal processor 84 compresses the digital signal and inserts error detection, error correction and signaling information. The compressed and encoded signal from the digital signal processor 84 is passed to the modulator 86. RF frequency generator 87 generates a reference carrier frequency, and passes it to modulator 86. The modulator 86 converts the digital signal to a form that is suitable for transmission on a RF carrier. The amplifier 88 then boosts the output of the modulator 86 for transmission via antenna 32.

The receiver 90 includes a low noise amplifier 92, a received signal processor 94, and a digital to analog converter 96. Received signals are passed to the low noise amplifier 92 that boosts the low-level RF digital signal to a level appropriate for input to the digital signal processor 94. The digital signal processor 94 includes a demodulator and channel decoder. The demodulator extracts the transmitted bit sequence from the received signal. The channel decoder detects and corrects channel errors in the received signal. The channel decoder also separates control and signaling data from speech data. The digital signal processor 94 may also include an equalizer to compensate for phase and amplitude distortion of the transmitted signal. The control and signaling data is passed to the control unit 40. Speech data is processed by a speech decoder and passed to the digital to analog converter 96. The digital to analog converter 96 converts the speech data into an analog signal that is applied to the speaker 22 to generate audible signals that can be heard by the user. The transmitter 80 and receiver 90 are coupled to the antenna 32. The antenna 32 is used for both transmission and reception.

Control unit 40 functions to coordinate the operation of the transmitter 80 and the receiver 90. These functions include power control, channel selection, timing, as well as a host of other functions. The control unit 40 inserts signaling messages into the transmitted signals and extracts signaling messages from the received signals. In a mobile terminal 10, the control unit 40 responds to any base station commands contained in the signaling messages, and implements those commands. When the user enters commands via the input 16 such as a keypad, the commands are transferred to the control unit 40 for action. These tasks are typically performed by real-time software executing on a stored program processor within the control unit 40.

Increasingly, the control unit 40 also performs a variety of data processing tasks, such as compressing and decompressing image, audio and video data; executing user programs, such as calendars, games, and the like; executing browser software for user interaction with the Internet; and similar computing tasks, which may be performed by non-real-time software executing on a stored program processor within the control unit 40.

As the real-time and non-real-time software described above are required in many cases to execute simultaneously, and to deal with the increased computational load, the control unit 40 may include a plurality of processors, as depicted in Figures 1, 2 and 4, and described in greater detail herein.

The control unit 40 is operatively connected to memory, which may comprise any mixture of RAM, ROM, EEPROM, etc., as is well known in the art. Memory may be used for storage of various programmed features and functions, accessed and controlled via menus displayed on display 14 and control inputs received from input 16. Memory may also store both real-time and non-real-time code, and used dynamically in the execution of such code in the control unit 40. According to the present invention, memory is a shared resource accessed by two or more CPUs through a memory management unit that performs prioritized arbitration among all requesting CPUs.

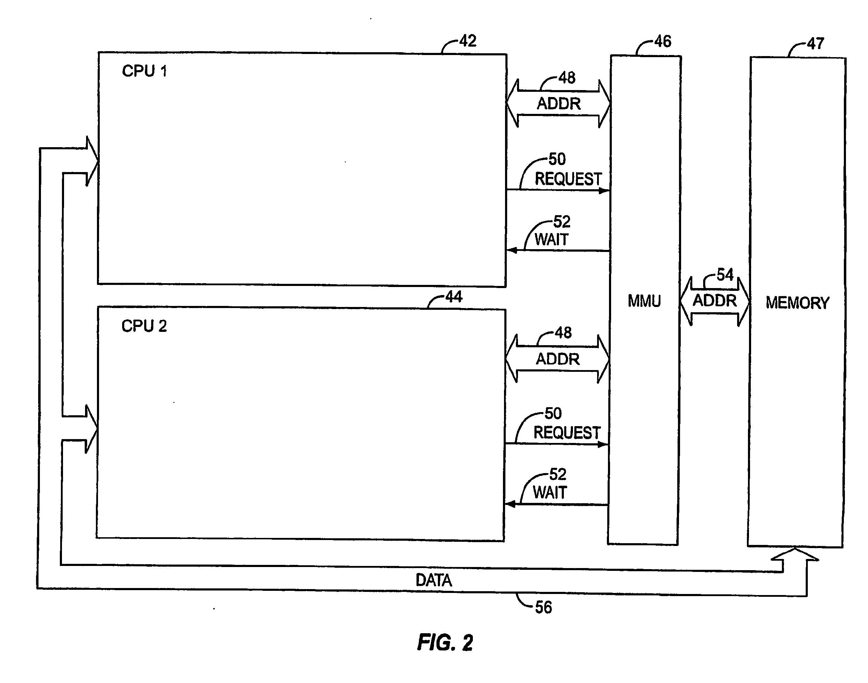

Figure 2 depicts one embodiment of a multi-CPU, shared memory control unit 40 for a mobile terminal. The control unit 40 includes CPUs 42 and 44, both of which access shared memory resource 47 via memory management unit (MMU) 46. The memory resource 47 also connects to both CPUs 42, 44 via data bus 56.

In particular, each CPU 42, 44 accesses to the MMU 46 via an address bus 48 and handshaking signals REQUEST 50 and WAIT 52. When a CPU 42, 44 wishes to access the memory resource 47, it places an address on the address bus 48 and asserts its REQUEST signal 50. The MMU 46 grants access to a CPU 42, 44 by deasserting the appropriate WAIT signal 52. The MMU 46 then takes the address from the relevant address bus 46, optionally performs an address space transtation (e.g., a virtual to physical address), and outputs an address to the memory resource 47 on the address bus 54. Additional controls, such as memory bank or chip selects, read/write signals, row and column refresh signals, and the like, which are well known to those of skill in the art, and are not directly relevant to the present invention, are omitted for clarity.

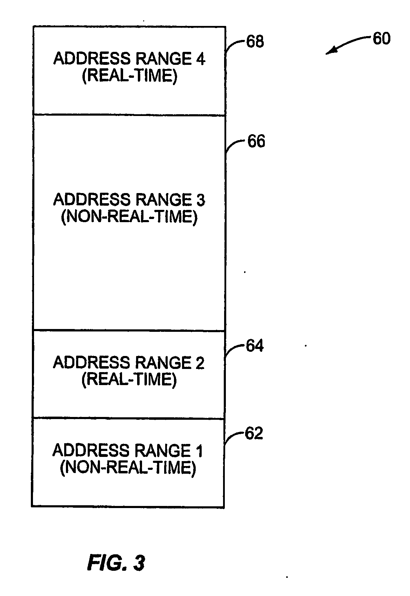

According to the present invention, the CPU 42, 44 executing real-time code is granted priority access to the shared memory resource 47 by the MMU 46 by memory mapping. As depicted in Figure 3, the code portion of the logical address range is divided into at least two discrete ranges. The address range 60 may be divided into, for example, a first, non-real-time address range 62; a second, real-time address range 64; a third, non-real-time address range 66; and a fourth, real-time address range 68. During the software linking process, software modules containing real-time code are located in one of the real-time address ranges 64, 68. Software modules containing only non-real-time code are located in one of the non-real-time address ranges 62, 66. This may be accomplished by a static linker in the case of ROM or flash memory, or by a dynamic loader in the case of code execution from RAM.

Upon detecting the assertion of a REQUEST signal 50 from one or more CPUs 42, 44, the MMU 46 partially decodes the addresses on the address buses 48 of the requesting CPUs 42, 44, and determines within which range 62, 64, 66, 68 each access request falls. Based on the real-time or non-real-time property assigned to the respective ranges, the MMU 46 determines memory access priority among the requesting CPUs 42, 44 according to the following rules. When any CPU 42, 44 requests access to the memory 47:

If the memory 47 is not currently being accessed by another CPU 42, 44, the MMU 46 will allow access by the requesting CPU 42, 44 by deasserting the WAIT signal 52 associated with the requesting CPU 42, 44.

If another CPU 42, 44 is currently accessing the memory 47 within a real-time address range 64, 68, the MMU 46 will postpone the requested access by asserting the WAIT signal 52 associated with the requesting CPU 42, 44.

If another CPU 42, 44 is currently accessing the memory 47 within a non-real-time address range 62, 66, and the requested access falls within a real-time address range 64, 68, the MMU 46 will force the non-real-time CPU 42, 44 to a wait state by asserting the WAIT signal 52 associated with the currently accessing CPU 42, 44, and MMU 46 will allow access by the real-time requesting CPU 42, 44 by deasserting the WAIT signal 52 associated with the requesting CPU 42, 44.

If another CPU 42, 44 is currently accessing the memory 47 within a real-time address range 64, 68, and the requested access falls within a real-time address range 64, 68, the MMU 46 will allow access to the requesting CPU 42, 44 on a round-robin basis.

In this manner, the CPU 42, 44 executing real-time software is granted priority access to the shared memory resource 47 over the CPU 42, 44 executing non-real-time software. This reduces the latency of memory 47 accesses by the real-time CPU 42, 44. The MMU 46 determines the access priority on the basis of memory management. This method has the basis potential to allow greater flexibility in system design, save cost through sharing of resources, decrease software complexity, and insure deterministic execution of real-time code.

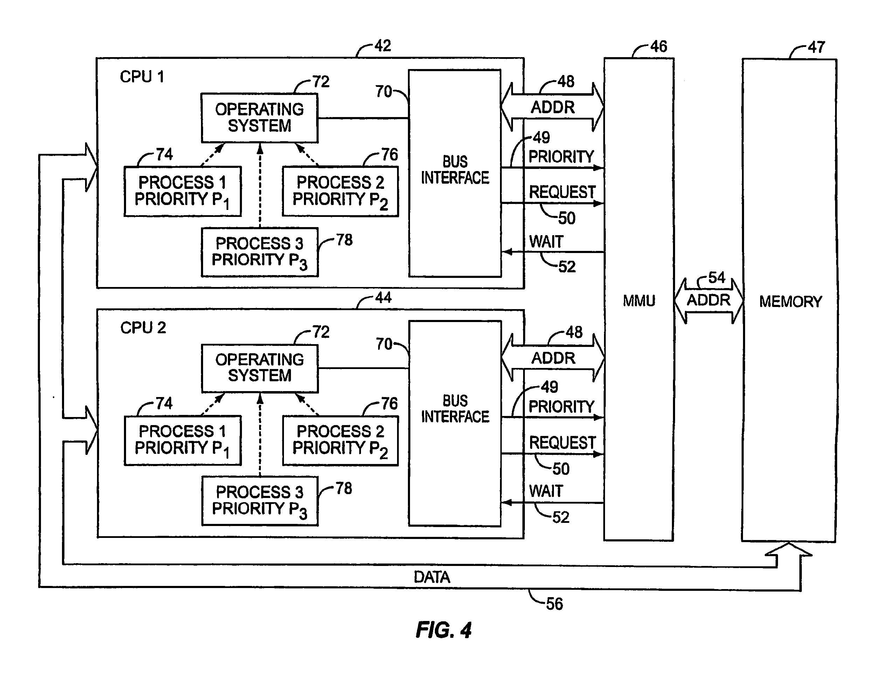

Figure 4 depicts a system featuring shared memory resource access according to another embodiment of the present invention. Each CPU 42, 44 executes operating system software 72 and a plurality of processes 74, 76, 78. Each process 74, 76, 78 may be real-time or non-real-time, and may execute with varying priorities P1, P2, P3, as assigned by the operating system 72. Each CPU 42, 44 includes a bus interface 70, and the same interface signals to a MMU 46 as described above, with the addition of a PRIORITY signal 49. The PRIORITY signal 49 may comprise a single bit, which may for example indicate real-time code by a "1" or non-real-time code by a "0". Alternatively, the PRIORITY signal 49 may comprise a plurality of bits, with a range of priorities encoded in the state of the signal bits.

The bus interface 70 translates the priorities P1, P2, P3 of processes running on the respective CPU 42, 44 into a PRIORITY signal 49, scaling the process priorities if necessary into an appropriate range for the PRIORITY signal 49. The PRIORITY signal 49 presents the priority of the CPU 42, 44 memory access request whenever the associated REQUEST signal 50 is asserted. If multiple CPUs 42, 44 request access to the shared memory resource 47 simultaneously, the CPU 42, 44 with the highest priority encoded on its respective PRIORITY signal 50 is granted access to the memory resource 47. If two or more CPUs 42, 44 simultaneously request access with the same priority (that higher than any other requesting CPU 42, 44), the high-priority requesting CPUs 42, 44 are granted access on a round-robin basis.

The use of a PRIORITY signal 49 may provide greater flexibility than a memory-mapped arbitration scheme, as it does not impose any linking requirements on the software modules (e.g., to locate them in dedicated real-time or non-real-time regions of logical memory). This arbitration system also provides additionally flexibility, as software processes may be assigned different priority levels independently from whether they execute in real-time or non-real time. Additionally, the MMU 46 hardware may be reused for different software configurations.

## Claims

1. A method of arbitrating access to a memory resource between at least two CPUs in a mobile terminal, comprising:
Providing a mobile terminal (10) including at least two CPUs (42, 44), each operative to execute both real-time and non-real-time processes, and a shared memory resource (47);
receiving a request and a changeable priority indication from each said CPU (42, 44),
wherein said priority indication indicates a higher priority if the respective CPU (42, 44) is executing a real-time process than a non-real-time-process; identifying the highest priority request among all requesting CPUs;
if said memory resource (47) is available, granting access to said memory resource (47) to the highest priority requesting said CPU;
if access to said memory resource (47) is granted to another CPU of an equal or higher priority, allowing said other CPU to complete its access to said memory resource (47); and
if access to said memory resource (47) is granted to another CPU of a lower priority, interrupting said other CPU access and granting access to said memory resource (47) to the highest priority requesting said CPU.

2. The method of claim 1 wherein said priority indication comprises a binary signal.

3. The method of claim 2 wherein said priority indication comprises a plurality of binary signals, and wherein a corresponding plurality of priority levels are encoded in the state of said binary signals.

4. The method of claim 1 wherein said priority indication comprises an address associated with said request;

5. The method of claim 4 wherein identifying the highest priority request among all requesting CPUs comprises partially decoding said address and identifying a range (60) encompassing said address in a memory map.

6. The method of claim 5 wherein said memory map includes a real-time range (64, 68) and a non-real-time range (62, 66).

7. The method of claim 6 wherein software modules containing real-time code are located in said real-time range (64, 68) and software modules containing non-real-time code are located in said non-real-time range (62, 66) during a software linking process.

8. The method of claim 6 wherein addresses in said real-time range (64, 68) have a higher priority than addresses in said non-real-time range (62, 66).

9. The method of claim 1 further comprising:
if access to said memory resource (47) is granted to another CPU of an equal or higher priority, granting access to said memory resource (47) to the highest requesting said CPU following completion of said other CPU access.

10. The method of claim 1 further comprising:
if said highest priority request is shared by two or more requesting CPUs, sequentially granting access to said memory resource (47) to said highest requesting CPUs on a round robin basis.

11. A mobile terminal including at least two CPUs and a shared memory resource, comprising:
a mobile terminal (10);
at least two CPUs (42, 44) in said mobile terminal (10), each operative to execute real-time and non-real-time software modules;
a shared memory resource (47) in said mobile terminal (10); and
a memory management unit (46) in said mobile terminal (10) operative to arbitrate access to said shared memory resource (47) among said at least two CPUs (42, 44), wherein CPUs executing real-time software modules have a higher access priority than CPUs executing non-real-time software modules.

12. The mobile terminal of claim 11 wherein said CPUs (42, 44) transmit to said memory management unit (46) a request for access to said shared memory resource (47) and an address.

13. The mobile terminal of claim 12 wherein said memory management unit (46) partially decodes said address for each requesting CPU to determine whether said CPU is executing real-time or non-real-time software modules.

14. The mobile terminal of claim 13 wherein said memory management unit (46) maintains a memory map with real-time (64, 68) and non-real-time ranges (62, 66), and wherein each said requesting CPU is determined to be executing real-time or non-real-time software modules based on the range said partially decoded address falls in.

15. The mobile terminal of claim 11 wherein said CPUs (42, 44) transmit to said memory management unit (46) a request for access to said shared memory resource (47) and a priority signal (49).

16. The mobile terminal of claim 15 wherein said priority signal (49) indicates whether the associated CPU is executing a real-time or non-real-time software module.

17. The mobile terminal of claim 15 wherein said priority signal (49) is a multi-bit signal, and wherein a priority level is encoded in the bit pattern of said signal (49).

## Patentansprüche

1. Verfahren des Arbitrierens von Zugriff auf eine Speicherressource zwischen mindestens zwei CPUs in einem Mobilendgerät, umfassend:
Bereitstellen eines Mobilendgeräts (10), das mindestens zwei CPUs (42, 44), welche jeweils betreibbar sind zum Ausführen von Echtzeit- und Nicht-Echtzeitverarbeitungen, und eine geteilte Speicherressource (47) beinhaltet;
Empfangen einer Anfrage und einer änderbaren Prioritätsanzeige von jeder CPU (42, 44),
wobei die Prioritätsanzeige eine höhere Priorität anzeigt, wenn die jeweilige CPU (42, 44) eine Echtzeitverarbeitung ausführt, als eine Nicht-Echtzeitverarbeitung;
Identifizieren der Anfrage höchster Priorität unter allen anfragenden CPUs;
wenn die Speicherressource (47) verfügbar ist, Gewähren eines Zugriffs auf die Speicherressource (47) für die anfragende CPU höchster Priorität;
wenn ein Zugriff auf die Speicherressource (47) für eine andere CPU von einer gleichen oder höheren Priorität gewährt wurde, Erlauben, dass die andere CPU deren Zugriff auf die Speicherressource (47) fertig stellt; und
wenn ein Zugriff auf die Speicherressource (47) für eine andere CPU einer geringeren Priorität gewährt wurde, Unterbrechen des Zugriffs der anderen CPU und Gewähren des Zugriffs auf die Speicherressource (47) für die anfragende CPU höchster Priorität.

2. Verfahren nach Anspruch 1, wobei die Prioritätsanzeige ein Binärsignal umfasst.

3. Verfahren nach Anspruch 2, wobei die Prioritätsanzeige eine Vielzahl von Binärsignalen umfasst, und wobei eine entsprechende Vielzahl von Prioritätsleveln in dem Zustand der binären Signale codiert sind.

4. Verfahren nach Anspruch 1, wobei die Prioritätsanzeige eine mit der Anfrage assoziierte Adresse umfasst.

5. Verfahren nach Anspruch 4, wobei Identifizieren der Anfrage höchster Priorität unter allen anfragenden CPUs umfasst teilweises Decodieren der Adressen und Identifizieren eines Bereichs (60), der die Adresse in einem Speicherabbild umspannt.

6. Verfahren nach Anspruch 5, wobei das Speicherabbild einen Echtzeitbereich (64, 68) und einen Nicht-Echtzeitbereich (62, 66) beinhaltet.

7. Verfahren nach Anspruch 6, wobei Module, die Echtzeit-Code enthalten, in dem Echtzeitbereich (64, 68) lokalisiert sind, und Software-Module, die Nicht-Echtzeit-Code enthalten, in dem Nicht-Echtzeitbereich (62, 66) lokalisiert sind, während einer Software-Verlinkungsverarbeitung.

8. Verfahren nach Anspruch 6, wobei Adressen in dem Echtzeitbereich (64, 68) eine höhere Priorität haben als Adressen in dem Nicht-Echtzeitbereich (62, 66).

9. Verfahren nach Anspruch 1, ferner umfassend:
wenn Zugriff auf die Speicherressource (47) für eine andere CPU gleicher oder höherer Priorität gewährt wurde, Gewähren von Zugriff auf die Speicherressource (47) für die höchste anfragende CPU, folgend der Fertigstellung des anderen CPU-Zugriffs.

10. Verfahren nach Anspruch 1, ferner umfassend:
wenn die Anfrage höchster Priorität durch zwei oder mehr anfragende CPUs geteilt wird, sequentielles Gewähren von Zugriff auf die Speicherressource (47) für die höchsten anfragenden CPUs in einer Reihumbasis.

11. Mobilendgerät mit mindestens zwei CPUs und einer geteilten Speicherressource, umfassend:
ein Mobilendgerät (10);
mindestens zwei CPUs (42, 44) in dem Mobilendgerät (10), welche jeweils betreibbar sind zum Ausführen von Echtzeit und Nicht-Echtzeit-Software-Modulen;
eine geteilte Speicherressource (47) in dem Mobilendgerät (10); und
eine Speicherverwaltungseinheit (46) in dem Mobilendgerät (10), welche betreibbar ist zum Arbitrieren von Zugriff auf die geteilte Speicherressource (47) unter den mindestens zwei CPUs (42, 44), wobei CPUs, welche Echtzeit-Software-Module ausführen, eine höhere Zugriffspriorität aufweisen, als CPUs, welche Nicht-Echtzeit-Software-Module ausführen.

12. Mobilendgerät nach Anspruch 11, wobei die CPUs (42, 44) an die Speicherverwaltungseinheit (46) eine Anfrage für Zugriff auf die geteilt Speicherressource (47) und eine Adresse übertragen.

13. Mobilendgerät nach Anspruch 12, wobei die Speicherverwaltungseinheit (46) die Adressen für jede anfragende CPU teilweise decodiert, um zu bestimmen, ob die CPU Echtzeit- oder Nicht-Echtzeit-Software-Module ausführt.

14. Mobilendgerät nach Anspruch 13, wobei die Speicherverwaltungseinheit (46) ein Speicherabbild mit Echtzeit- (64, 68) und Nicht-Echtzeitbereichen (62, 66) hält, und wobei jede anfragende CPU bestimmt wird, Echtzeit- oder Nicht-Echtzeit-Software-Module auszuführen, basierend auf dem Bereich, in welchen die teilweise decodierte Adresse fällt.

15. Mobilendgerät nach Anspruch 11, wobei die CPUs (42, 44) an die Speicherverwaltungseinheit (46) eine Anfrage für Zugriff auf die geteilte Speicherressource (47) und ein Prioritätssignal (49) senden.

16. Mobilendgerät nach Anspruch 15, wobei das Prioritätssignal (49) anzeigt, ob die assoziierte CPU ein Echtzeit- oder Nicht-Echtzeit-Software-Modul ausführt.

17. Mobilendgerät nach Anspruch 15, wobei das Prioritätssignal (49) ein Multibitsignal ist, und wobei ein Prioritätslevel in dem Bitmuster des Signals (49) codiert ist.

## Revendications

1. Procédé d'arbitrage de l'accès à une ressource de mémoire entre au moins deux unités centrales dans un terminal mobile, comprenant les étapes consistant à :
fournir un terminal (10) mobile comportant au moins deux unités (42, 44) centrales, chacune fonctionnant pour exécuter des processus en temps réel et en temps non réel, et une ressource (47) de mémoire partagée ;
recevoir une demande et une indication de priorité variable de chacune desdites unités (42, 44) centrales,
dans lequel ladite indication de priorité indique une priorité supérieure si l'unité (42, 44) centrale respective exécute un processus en temps réel qu'un processus en temps non réel ; qui identifie la demande de priorité la plus élevée parmi toutes les unités centrales demandeuses ;
si ladite ressource (47) de mémoire est disponible, accorder l'accès à ladite ressource (47) de mémoire à ladite unité centrale demandeuse de priorité la plus élevée ;
si l'accès à ladite ressource (47) de mémoire est accordé à l'autre unité centrale d'une priorité supérieure ou égale, permettre à ladite autre unité centrale de compléter son accès à ladite ressource (47) de mémoire ; et
si l'accès à ladite ressource (47) de mémoire est accordé à l'autre unité centrale d'une priorité inférieure, interrompre ledit accès de l'autre unité centrale et accorder l'accès à ladite ressource (47) de mémoire à ladite unité centrale demandeuse de priorité la plus élevée.

2. Procédé de la revendication 1, dans lequel ladite indication de priorité comprend un signal binaire.

3. Procédé de la revendication 2, dans lequel ladite indication de priorité comprend une pluralité de signaux binaires, et dans lequel une pluralité correspondante de niveaux de priorité sont codés à l'état desdits signaux binaires.

4. Procédé de la revendication 1, dans lequel ladite indication de priorité comprend une adresse associée à ladite demande.

5. Procédé de la revendication 4, dans lequel l'identification de la demande de priorité la plus élevée parmi toutes les unités centrales demandeuses comprend un décodage partiel de ladite adresse et l'identification d'une gamme (60) englobant ladite adresse dans une configuration mémoire.

6. Procédé de la revendication 5, dans lequel ladite configuration mémoire comporte une gamme (64, 68) en temps réel et une gamme (62, 66) en temps non réel.

7. Procédé de la revendication 6, dans lequel les modules de logiciel contenant un code en temps réel sont situés dans ladite gamme (64, 68) en temps réel et les modules de logiciel contenant un code en temps non réel sont situés dans ladite gamme (62, 66) en temps non réel pendant un processus de liaison de logiciel.

8. Procédé de la revendication 6, dans lequel les adresses dans ladite gamme (64, 68) en temps réel possèdent des priorités supérieures à celles des adresses dans ladite gamme (62,66) en temps non réel.

9. Procédé de la revendication 1 comprenant en outre :
si l'accès à ladite ressource (47) de mémoire est accordé à l'autre unité centrale d'une priorité supérieure ou égale, accorder l'accès à ladite ressource (47) de mémoire à ladite unité centrale demandeuse de priorité la plus élevée après l'achèvement dudit autre accès de l'unité centrale.

10. Procédé de la revendication 1, comprenant en outre :
si ladite demande de priorité la plus élevée est partagée par deux ou plus de deux unités centrales demandeuses,
accorder séquentiellement l'accès à ladite ressource (47) de mémoire à ladite unité centrale demandeuse sur une base de chacun son tour.

11. Terminal mobile comportant au moins deux unités centrales et une ressource de mémoire partagée, comprenant:
un terminal (10) mobile ;
au moins deux unités (42, 44) centrales dans ledit terminal (10) mobile, chacun fonctionnant pour exécuter des modules de logiciel en temps réel et des modules de logiciel en temps non réel ;
une ressource (47) de mémoire partagée dans ledit terminal (10) mobile ; et
une unité (46) de gestion de mémoire dans ledit terminal (10) mobile fonctionnant pour arbitrer l'accès à ladite ressource (47) de mémoire partagée parmi lesdits au moins deux unités (42, 44) centrales, les unités centrales exécutant des modules logiciels en temps réel ayant une priorité d'accès plus élevée que les unités centrales exécutant des modules logiciels en temps non réel.

12. Terminal mobile de la revendication 11, dans lequel lesdites unités (42, 44) centrales transmettent à ladite unité (46) de gestion de mémoire une demande d'accès à ladite ressource (47) de mémoire partagée et à une adresse.

13. Terminal mobile de la revendication 12, dans lequel ladite unité (46) de gestion de mémoire décode partiellement ladite adresse pour chaque unité centrale demandeuse pour déterminer si ladite unité centrale exécute un module logiciel en temps réel ou un module logiciel en temps non réel.

14. Terminal mobile de la revendication 13, dans lequel ladite unité (46) de gestion de mémoire maintient une configuration mémoire avec une gamme (64, 68) en temps réel et une gamme (62, 66) en temps non réel, et dans lequel chacune desdites unités centrales demandeuses est déterminée pour exécuter un module de logiciel en temps réel ou un module de logiciel en temps non réel sur la base de la gamme où s'inscrit ladite adresse partiellement décodée.

15. Terminal mobile de la revendication 11, dans lequel lesdites unités (42, 44) centrales transmettent à ladite unité (46) de gestion de mémoire une demande d'accès pour ladite ressource (47) de mémoire partagée dudit et pour (49) un signal de priorité.

16. Terminal mobile de la revendication 15, dans lequel ledit signal (49) de priorité indique si l'unité centrale associée est en train d'exécuter un module de logiciel en temps réel ou un module de logiciel en temps non réel.

17. Terminal mobile de la revendication 15, dans lequel ledit signal (49) de priorité est un signal à plusieurs bits, et dans lequel un niveau de priorité est codé dans la configuration binaire dudit signal (49).
